# EUROPÄISCHE PATENTSCHRIFT

(11) **EP 0 755 825 B1**
(45) Veröffentlichungstag und Bekanntmachung des Hinweises auf die Patenterteilung: **12.04.2000**
(21) Anmeldenummer: 96108685.7
(22) Anmeldetag: 30.05.1996
(51) Int. Cl.: B60Q 3/02

(54) **Schaltanordnung für die Innenbeleuchtung von Kraftfahrzeugen**
Switching arrangement for interior lighting for vehicle
Dispositif de commutation pour éclairage intérieur de véhicule automobile

(30) Priorität: 26.07.1995 DE 19527350
(43) Veröffentlichungstag der Anmeldung: 29.01.1997
(73) Patentinhaber: Bayerische Motoren Werke Aktiengesellschaft, 80788 München (DE)
(72) Erfinder: Wagner, Armin, 85757 Karlsfeld (DE)

(56) Entgegenhaltungen:
- DE-A- 3 532 338
- DE-A- 4 309 817
- US-A- 4 866 345

## Beschreibung

Die Erfindung bezieht sich auf eine Schaltanordnung mit den Merkmalen des Oberbegriffs von Patentanspruch 1.

Eine derartige Schaltanordnung ist aus der DE 43 09 817 A1 bekannt. Wesentlich bei dieser Schaltanordnung ist, daß der Befehlsgeber praktisch leistungslos arbeitet und lediglich einen Schaltbefehl an das Steuergerät liefert.

Der Erfindung liegt die Aufgabe zugrunde, die Einsatzmöglichkeiten der bekannten Schaltanordnung zu vergrößern.

Die Erfindung löst diese Aufgabe durch die kennzeichnenden Merkmale des Patentanspruchs 1.

Wesentlich für die Erfindung ist einerseits die Aufteilung der Innenbeleuchtung in zwei Stromkreise. Es kann sich dabei um einen Stromkreis zur Versorgung der vorderen und einen Stromkreis für die hinteren Innenleuchten handeln. Die Innenleuchten können im Fondraum und/oder im Gepäckraum des Kraftfahrzeugs positioniert sein. In jedem Fall ist dann, wenn eine getrennte Beschaltung von Innenleuchten erforderlich ist, eine Aufteilung der Innenbeleuchtung in zwei Stromkreise sinnvoll. Durch die Erfindung wird es möglich, mit ein und demselben Befehlsgeber diese Stromkreise zu beschalten. Als weiteres Merkmal der Erfindung ist die zeitliche Aufeinanderfolge der mit dem Befehlsgeber aufgegebenen Schaltbefehle. Nur dann, wenn ein zeitlicher Abstand aufeinanderfolgender Schaltbefehle oder eine vorgegebene Gesamtschaltzeit eingehalten wird, werden die Schaltkombinationen in der definierten Reihenfolge eingestellt. Erfolgt nach Ablauf der zeitlichen Vorgabe ein weiterer Schaltbefehl, so wird das Schaltprogramm wiedereingestellt, aufgrund dessen die Innenbeleuchtung abhängig vom Betriebszustandsparameter des Kraftfahrzeugs selbsttätig geschaltet wird. Unter Schaltprogramm kann die "klassische" Betriebsweise der Innenbeleuchtung bei geöffneter Fahrzeugtür oder aber auch Verfeinerungen davon, bei denen die Innenbeleuchtung im Zusammenhang mit dem Öffnen der Fahrzeugtür und/oder dem Fahrbetrieb des Kraftfahrzeugs geschaltet wird.

Bei den Zeitabständen für aufeinanderfolgende Schaltbefehle ist beispielsweise ein Zeitraum von 0,5 sec, bei der Gesamtschaltzeit eine Zeit von 2 sec sinnvoll. Die Zeitspanne für das Eintreffen aufeinanderfolgender Schaltbefehle kann auch variabel in Abhängigkeit von den jeweils eingeschalteten Innenleuchten sein. Sie kann ferner abhängig davon sein, in welcher Weise die Innenleuchten eingeschaltet werden. So kann die Innenbeleuchtung bzw. ein Teil davon soft, d.h. mit gesteuert ansteigender Intensität eingeschaltet werden. Die Schaltzeit, d.h. das Zeitfenster für aufeinanderfolgende Betätigungen des Befehlsgebers kann nun auf den Zeitpunkt abstellen, bei dem die maximale Helligkeit erreicht ist. In jedem Fall ist die Schaltzeit für aufeinanderfolgende Befehle und/oder die Gesamtschaltzeit so abzustimmen, daß der Fahrzeugbenutzer die Möglichkeit erhält, zu erkennen, welche Innenleuchten eingeschaltet sind und ob er statt dessen andere Leuchten einschalten möchte. Er soll nicht gezwungen sein, blind innerhalb kurzer Zeit beispielsweise drei Schaltbefehle aufzugeben, um zu dem gewünschten Ergebnis, beispielsweise der alleinigen Einschaltung der Gepäckraumleuchte zu gelangen. Eine derartige Betriebsweise würde die Akzeptanz der Erfindung deutlich verringern. Lediglich dann, wenn eine derartige "blinde" Betätigung des Befehlsgebers durch eine zusätzliche Hilfe, beispielsweise die optische Anzeige eines Schriftzuges für die wirksame Schaltkombination unterstützt wird, wäre ein derartiges Vorgehen akzeptabel.

Die Gesamtzahl der Schaltkombinationen kann abhängig vom Anwendungsfall variieren. Sie kann beispielsweise gleich der Zahl 3 sein. Angenommen, die Innenbeleuchtungsstromkreise würden Leuchten für vorne und hinten jeweils versorgen, so könnte dann neben der notwendigerweise vorhandenen ersten Schaltkombination ein Schaltprogramm wirksam werden. Eine zweite Schaltkombination könnte auf die Einschaltung sämtlicher Leuchten vome und hinten und die dritte Schaltkombination auf die Einschaltung nur der Leuchten im Fondbereich gerichtet sein.

Die Gesamtzahl der Schaltkombination kann auch gleich 4 sein. In Erweiterung des so eben beschriebenen Anwendungsfalls für drei Schaltkombinationen kann als weitere Schaltkombination auch die Einschaltung nur der Leuchten im Frontbereich (vorne) realisiert werden.

Neben der genannten Möglichkeit, bei einer der möglichen Schaltkombinationen das Schaltprogramm innerhalb des Steuergeräts selbsttätig zu aktivieren, ist es auch möglich, hierzu eine erneute Betätigung des Befehlsgebers vorzusehen. Selbstverständlich ist diese Betätigung dann außerhalb der für die Einstellung der Schaltkombinationen vorgesehenen Zeitfenster durchzuführen. Damit wird es möglich, die Anwendung der Erfindung noch mehr zu vergrößern. Es ist dann möglich, zusätzlich zum Schaltprogramm drei bzw. vier voneinander unabhängige Schaltkombinationen für die Innenleuchten zu verwirklichen mit der zusätzlichen Möglichkeit, auch das Schaltprogramm individuell ein- und auszuschalten. Die vier Schaltkombinationen können gebildet sein durch erstens alle Innenleuchten, zweitens nur die Innenleuchte im Frontbereich, drittens die Innenbeleuchtung im Fondbereich und viertens allein die Gepäckraumleuchten. Eine höhere Variationsmöglichkeit ist möglich bei einer entsprechend feineren Untergliederung der Innenbeleuchtungsstromkreise, z.b. durch Aufteilung in links/rechts.

Die Erfindung ist anhand der Zeichnung weiter erläutert. Es zeigt
Fig. 1 eine Schaltanordnung gemäß der Erfindung,
Fig. 2 ein Diagramm zur Erläuterung der Wirkungsweise der Erfindung.

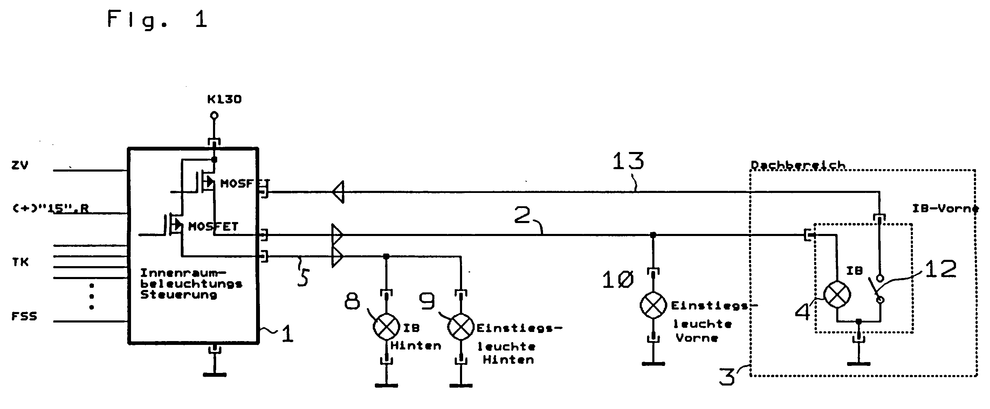

Die in Fig. 1 gezeigte Schaltanordnung enthält ein Steuergerät 1, das mit dem Pluspol des Bordnetzes (KL 30) sowie der Masse des Bordnetzes verbunden ist. Vom Steuergerät 1 führt eine Leitung 2 zu einer Baueinheit 3, die sich z.B. im Dachbereich (nicht dargestellt) im Inneren des Kraftfahrzeugs befindet. Die Baueinheit 3 enthält im wesentlichen einen Beleuchtungskörper 4 als Teil der Innenbeleuchtung sowie parallel dazu einen Befehlsgeber 12 in Form eines Tastschalters, der eine niedrig belastete Steuerleitung 13 zwischen dem Steuergerät 1 und der Fahrzeugmasse schaltet.

Mit dem Beleuchtungskörper 4 parallel geschaltet ist eine Einstiegsleuchte 10, die Teil des durch die Stromleitung 2 versorgten Innenbeleuchtungsstromkreises ist.

Ein weiterer Innenbeleuchtungsstromkreis 5 versorgt zwei Beleuchtungskörper 8 und 9. Dabei handelt es sich um einen Leuchtkörper für die Innenbeleuchtung im Fondbereich und eine Einstiegsleuchte für eine der Fondtüren.

Der Einfachheit halber ist für jeden Typ von Leuchtkörper jeweils nur ein Vertreter dargestellt. Anstelle nur eines Beleuchtungskörpers 4 können auch mehrere für die Innenbeleuchtung im Frontbereich vorgesehen sein. Das gleiche gilt für die Einstiegsleuchte 10, die auch mehrfach in jeder der hinteren Türen vorgesehen sein kann, usw.

Die durch die Leitungen 2 und 5 versorgten Stromkreise sind unabhängig voneinander schaltbar. Die Beschaltung geschieht mit Hilfe des Befehlsgebers 12, wie im folgenden erläutert wird. Es sei zunächst der Fall angenommen, bei dem die übliche Betriebsart "Schaltprogramm" eingestellt ist. Der Tastschalter 12 befindet sich dazu in der eingezeichneten Lage. Entsprechend dem Schaltprogramm wird die Innenbeleuchtung beim Ein- und Aussteigen z.B. für unterschiedlich lange Nachlaufzeiten eingeschaltet und ergänzend wird dieses Einschalten vom Zustand der Fahrzeugbeleuchtungsanlage abhängig gemacht (DE-OS 36 28 345). Wird nun der Tastschalter 12 kurzzeitig betätigt, d.h. über die Leitung 13 kurzzeitig (einige msec) auf Massepotential gelegt, so schaltet das Steuergerät 1 anstelle des Schaltprogramms die Innenbeleuchtungskörper 4, 8, 9 und 10 bleibend ein. Es wird somit als erste Schaltkombination die gleichzeitige Einschaltung der beiden Stromkreise 2 und 5 vorgenommen.

Wird nun der Befehlsgeber 12 innerhalb eines Zeitfensters von 500 msec nach dem ersten Betätigen erneut betätigt, so wird die zweite Schaltkombination eingestellt. Dabei ist lediglich der Stromkreis 5 für die im Fondbereich vorgesehenen Leuchten 8 und 9 eingeschaltet. Wie die Leuchte 10 kann der Einschaltzustand der Leuchte 9 auch zusätzlich von einem nicht gezeigten Türkontaktschalter abhängig sein, d.h. die Leuchte 9 nur eingeschaltet sein, wenn zusätzlich die Tür geöffnet und damit der Türkontaktschalter geschlossen ist. In jedem Fall aber ist die Leuchte 8 eingeschaltet.

Wird nun erneut innerhalb eines mit dem zweiten Betätigen des Befehlsgebers anlaufenden Zeitfensters der Befehlsgeber 12 betätigt, so kann als weitere Schaltkombination lediglich der Stromkreis 2 an Spannung gelegt sein, während der Stromkreis 5 ausgeschaltet ist. Es leuchten dann lediglich die Leuchten 4 und (sofern ein Türkontaktschalter vorgesehen ist, bei geöffneter Tür) die Leuchte 10. Das Zeitfenster kann wie vorhin wieder 0,5 sec oder aber auch einen davon abweichenden Wert von beispielsweise 1 sec besitzen. Wird schließlich erneut innerhalb eines Zeitfensters von z.B. 0,4 sec der Befehlsgeber 12 betätigt, so wird die Innenbeleuchtung komplett ausgeschaltet. Keine der Leitungen 2 und 5 liegt dann an Spannung.

Wird der Befehlsgeber 12 außerhalb eines Zeitfensters betätigt, so geht die Innenbeleuchtung von der wirksamen Schaltkombination in den Zustand "Schaltprogramm" über. Die Innenbeleuchtung wird dann wieder durch das Steuergerät 1 anhand der vorliegenden Betriebszustandsparameter des Kraftfahrzeugs geschaltet.

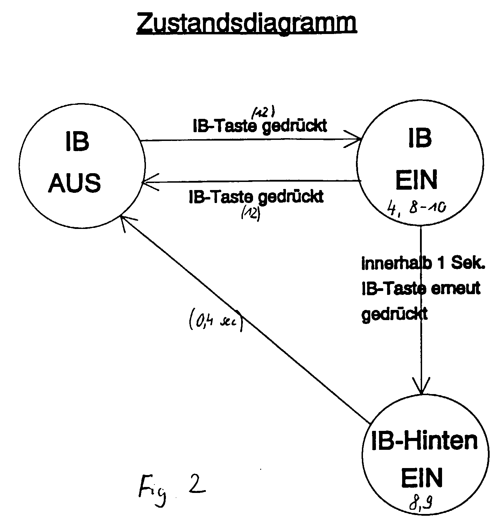

Der funktionelle Zusammenhang zwischen der Betätigung des Befehlsgebers 12 und dem Umfang der wirksamen Innenbeleuchtung IB ist in Fig. 2 gezeigt. Die jeweils eingeschalteten Leuchten von Fig. 1 sind dabei zusätzlich angegeben.

Damit ist es möglich, eine Vielzahl von Schaltkombinationen für Innenbeleuchtungskörper mit einem einfachen und übersichtlichen Funktionsschema leistungslos und an ein und derselben Stelle zu schalten. Es wird damit möglich, ein Höchstmaß von Bedienungskomfort mit geringem elektrischen Aufwand zu realisieren.

## Patentansprüche

1. Schaltanordnung für die Innenbeleuchtung von Kraftfahrzeugen, bei der ein Steuergerät (1) die Innenbeleuchtung (8, 9) abhängig von Betriebszustandsparametern des Kraftfahrzeugs selbsttätig nach einem vorgegebenen Schaltprogramm ein- und ausschaltet, bei der ein willkürlich betätigbarer elektrischer Befehlsgeber (12) vorhanden ist, der mit dem Steuergerät (1) verbunden ist, und bei der ferner das Steuergerät (1) bei Ansteuerung durch den Befehlsgeber (12) das Schaltprogramm aus- und die Innenbeleuchtung (8, 9) bleibend einschaltet, dadurch gekennzeichnet, daß das Steuergerät (1) bei mehrmaligem Betätigen des Befehlsgebers (12) innerhalb einer vorgegebenen Zeit eine definierte Folge von Schaltkombinationen zweier Innenbeleuchtungsstromkreise (2, 5) schaltet.

2. Schaltanordnung nach Anspruch 1, dadurch gekennzeichnet, daß die Gesamtzahl der Schaltkombinationen gleich 3 ist.

3. Schaltanordnung nach Anspruch 1, dadurch gekennzeichnet, daß die Gesamtzahl der Schaltkombinationen gleich 4 ist.

4. Schaltanordnung nach einem der Ansprüche 1 bis 3, dadurch gekennzeichnet, daß bei erneutem Ansteuern des Steuergeräts (1) durch den Befehlsgeber (12) wieder das Schaltprogramm einstellbar ist.

## Claims

1. A switching arrangement for the interior lighting of motor vehicles, wherein a control device (1) switches the interior lighting (8, 9) on and off automatically in accordance with a set switching program depending on the operating-state parameters of the vehicle, wherein an electric pick-up (12) can be operated at will and is connected to the control device (1), and wherein the control device (1), when actuated by the pick-up (12), switches off the switching program and permanently switches on the interior lighting (8, 9), characterised in that if the pick-up (12) is repeatedly actuated within a preset time, the control device (1) switches on a defined sequence of switching combinations of two interior lighting circuits (2, 5).

2. A switching arrangement according to claim 1, characterised in that the total number of switching combinations is three.

3. A switching arrangement according to claim 1, characterised in that the total number of switching combinations is four.

4. A switching arrangement according to any of claims 1 to 3, characterised in that if the control device (1) is actuated again by the pick-up (12), a return is made to the switching program.

## Revendications

1. Dispositif de commutation pour l'éclairage intérieur de véhicules automobiles, dans lequel un appareil de commande (1) allume et éteint l'éclairage intérieur (8, 9) en fonction de paramètres d'états de fonctionnement du véhicule automobile selon un programme de commutation prédéfini, dans lequel
- un donneur d'ordre électrique (12), que l'on peut volontairement actionner, est relié à l'appareil de commande (1), et en outre,
- l'appareil de commande (1) débranche, lors de la commande par le donneur d'ordres (12), le programme de commutations et branche l'éclairage intérieur (8, 9) d'une façon maintenue,
caractérisé en ce que
l'appareil de commande (1) quand on actionne plusieurs fois le donneur d'ordres (12) à l'intérieur d'une période de temps déterminée branche une série définie de combinaisons de commutations de deux circuits d'éclairage intérieurs (2, 5).

2. Dispositif de commutation selon la revendication 1,
caractérisé en ce que
le nombre total des combinaisons de commutation est égal à trois.

3. Dispositif de commutation selon la revendication 1,
caractérisé en ce que
le nombre total des combinaisons de commutation est égal à quatre.

4. Dispositif de commutation selon l'une des revendications 1 à 3,
caractérisé en ce que
lors d'une commande renouvelée de l'appareil de commande (1) par le donneur d'ordres (12) on peut établir à nouveau le programme de commutations.
